(19) Europäisches Patentamt
European Patent Office
Office européen des brevets

(11) **EP 4 779 440 A1**

(12) **EUROPEAN PATENT APPLICATION**

(43) Date of publication:
**22.07.2026 Bulletin 2026/30**

(21) Application number: **26152287.4**

(22) Date of filing: **16.01.2026**

(51) International Patent Classification (IPC):
**G06F 3/01** (2006.01)    **G06F 3/04815** (2022.01)

(52) Cooperative Patent Classification (CPC):
**G06F 3/011; G06F 3/04815; G06T 19/003;
G06T 19/006**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **17.01.2025 CN 202510083392**

(71) Applicant: **Beijing Zitiao Network Technology Co.,
Ltd.
Beijing 100190 (CN)**

(72) Inventors:
• **PANG, Na**
**Beijing, 100028 (CN)**
• **YANG, Yiping**
**Beijing, 100028 (CN)**
• **QU, Zhenyi**
**Beijing, 100028 (CN)**
• **SONG, Wenju**
**Beijing, 100028 (CN)**

(74) Representative: **Isarpatent
Patent- und Rechtsanwälte PartG mbB
Friedrichstraße 31
80801 München (DE)**

(54) **INTERACTION METHOD AND APPARATUS, ELECTRONIC DEVICE, AND STORAGE MEDIUM**

(57)    The present disclosure relates to an interaction method and apparatus, an electronic device, and a storage medium. The method includes: displaying a video playback window within an extended reality space, the video playback window being configured to display image content of a local area in a VR video image; and in response to an adjustment operation for a VR video picture, keeping the video playback window fixed in position within the extended reality space, and adjusting the local area of the VR video image displayed in the video playback window, a picture displayed in the video playback window after the adjustment being not exactly the same in content as a picture displayed in the video playback window before the adjustment. A method is provided which allows a user to adjust a viewing angle of a VR video according to his/her own needs to satisfy personalized viewing needs of the user.

Displaying a video playback window within an extended reality space, the video playback window being configured to display image content of a local area in a VR video image ⟍ S110

In response to an adjustment operation for a VR video picture, keeping the video playback window fixed in position within the extended reality space, and adjusting the local area of the VR video image displayed in the video playback window, a picture displayed in the video playback window after the adjustment being not exactly the same in content as a picture displayed in the video playback window before the adjustment ⟍ S120

**FIG. 1**

Processed by Luminess, 75001 PARIS (FR)

EP 4 779 440 A1

**Description**

**FIELD**

The present disclosure relates to the technical field of extended reality, and in particular, to an interaction method and apparatus, an electronic device, and a storage medium.

**BACKGROUND**

A VR video is a type of video filmed with a dedicated 360° or 180° VR camera based on extended reality technology. Its core feature is the ability to capture omnidirectional image information, providing the audience with an all-round view. A shared space is an experience mode provided by an extended reality device. In this experience mode, a user may experience a fusion of the physical world and virtual content at the same time. This experience mode allows the user to interact with the surrounding environment and other people, without being completely isolated in a virtual environment. The shared space is well suited for situations that require simultaneous attention to the real world and digital content, such as collaborative work, social interaction, and enhanced real-time applications.

In the shared space mode, when the user has a need to watch a VR video, a system will present the VR video by means of a video playback window. However, limited by the size and display characteristics of the video playback window, in practice, the video playback window may only display a local area image of the VR video, and cannot present the entire VR image at once. This results in that the viewing angle currently presented by the system may not meet the user's personalized needs. Therefore, how to help the user find a viewing angle that meets his/her own needs is an urgent problem that needs to be solved.

**SUMMARY**

In order to solve the above technical problems or at least partially solve the above technical problems, the present disclosure provides an interaction method and apparatus, an electronic device, and a storage medium.

In a first aspect, the present disclosure provides an interaction method, including:

displaying a video playback window within an extended reality space, the video playback window being configured to display image content of a local area in a VR video image; and

in response to an adjustment operation for a VR video picture, keeping the video playback window fixed in position within the extended reality space, and adjusting the local area of the VR video image displayed in the video playback window, a picture displayed in the video playback window after the adjustment being not exactly the same in content as a picture displayed in the video playback window before the adjustment.

In a second aspect, the present disclosure further provides an interaction apparatus, including:

a displaying module, configured to display a video playback window within an extended reality space, the video playback window being configured to display image content of a local area in a VR video image; and

an adjustment module, configured to: in response to an adjustment operation for a VR video picture, keep the video playback window fixed in position within the extended reality space, and adjust the local area of the VR video image displayed in the video playback window, a picture displayed in the video playback window after the adjustment being not exactly the same in content as a picture displayed in the video playback window before the adjustment.

In a third aspect, the present disclosure further provides an electronic device, including:

one or more processors;

a storage apparatus, configured to store one or more programs,

where the one or more programs, when executed by the one or more processors, cause the one or more processors to implement the interaction method according to the above first aspect.

In a fourth aspect, the present disclosure further provides a computer-readable storage medium, on which a computer program is stored, the computer program, when executed by a processor, implementing the interaction method according to the above first aspect.

Compared with the prior art, the technical solutions provided by embodiments of the present disclosure have the following advantages:

According to the technical solutions provided by the embodiments of the present disclosure, a video playback window is displayed within an extended reality space, the video playback window being configured to display image content of a local area in a VR video image; and in response to an adjustment operation for a VR video picture, the video playback window is kept fixed in position within the extended reality space, and the local area of the VR video image displayed in the video playback window is adjusted, a picture displayed in the video playback window after the adjustment being not exactly the same in content as a picture displayed in the video playback window before the adjustment. In essence, a method is provided which allows a user to adjust a viewing angle of a VR video according to his/her own needs. Thus, personalized viewing needs of the user may be satisfied.

## BRIEF DESCRIPTION OF THE DRAWINGS

The drawings herein, which are incorporated in and constitute a part of this specification, illustrate embodiments consistent with the present disclosure and, together with the description, serve to explain the principles of the present disclosure.

In order to more clearly explain the technical solutions in the embodiments of the present disclosure or in the prior art, the drawings required for describing the embodiments or the prior art will be briefly introduced below. Apparently, those of ordinary skill in the art may still derive other drawings from these drawings without creative efforts.

Fig. 1 is a flowchart of an interaction method provided by an embodiment of the present disclosure;
Fig. 2 to Fig. 5 are schematic diagrams illustrating examples of interaction principles provided by embodiments of the present disclosure;
Fig. 6 is a schematic structural diagram of an interaction apparatus provided by an embodiment of the present disclosure; and
Fig. 7 is a schematic structural diagram of an electronic device provided by an embodiment of the present disclosure.

## DETAILED DESCRIPTION OF EMBODIMENTS

In order to understand the above objects, features and advantages of the present disclosure more clearly, the solutions of the present disclosure will be further described below. It should be noted that the embodiments of the present disclosure and the features in the embodiments may be combined with each other without conflict.

Many specific details are set forth in the following description to facilitate a full understanding of the present disclosure, but the present disclosure may also be implemented in other ways different from those described herein. Obviously, the described embodiments are part of the embodiments of the present disclosure, but not all of the embodiments.

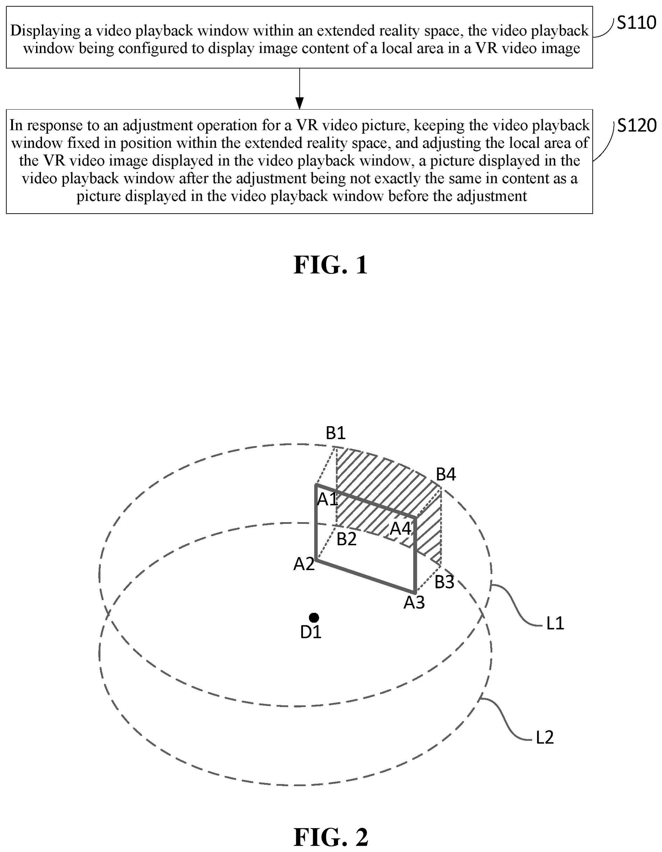

Fig. 1 is a flowchart of an interaction method provided by an embodiment of the present disclosure. The embodiment may be applied to a case of interaction in a client. The method may be performed by an interaction apparatus, which may be implemented in a form of software and/or hardware, and may be configured in an extended reality device.

The extended reality device described in the present application may include but be not limited to the following types:

a computer-side extended reality device, which uses a PC to perform related calculations and data output of an extended reality function, and an external computer-side extended reality device uses the data output by the PC to achieve the effect of extended reality;
a mobile extended reality device, which supports setting up a mobile terminal (such as a smart phone) in various ways (such as a head-mounted display provided with a dedicated card slot), and is connected to the mobile terminal in a wired or wireless manner, the mobile terminal performs related calculations of an extended reality function and outputs data to the mobile extended reality device, for example, watching an extended reality video through an APP of the mobile terminal; and
an all-in-one extended reality device, which is provided with a processor for performing related calculations of a virtual function, and thus has independent extended reality input and output functions, and does not need to be connected to a PC or a mobile terminal, and has a high degree of freedom in use.

As shown in Fig. 1, the method may specifically include:
S110, displaying a video playback window within an extended reality space, the video playback window being configured to display image content of a local area in a VR video image.

The extended reality space may be, for example, a virtual scene created by means of an environment image when the extended reality device is running. The virtual scene may be a simulation environment of the real world, a semi-simulation and semi-fictional virtual scene, or a pure fictional virtual scene. The extended reality space may include a sky, a land, an ocean, etc., and the land may include environmental elements such as a desert, a city, etc., and a user may move within the extended reality space. The environment image is equivalent to the desktop wallpaper displayed after the computer is turned on.

The video playback window may be, for example, an area within the extended reality space for playing VR videos such as 360°, 180°, or other angles. In practice, the video playback window may be, for example, an area in a control panel for playing VR videos.

The VR video corresponds to a spherical model. The spherical model may be a three-dimensional geometric model used to carry the VR video image, which is an idealized sphere, and the surface of the spherical model is used as a mapping carrier for the content of the VR video image. There is a correspondence between points on the surface of the spherical model and pixel points in the VR video image, and this correspondence may be determined by means of a spherical projection method such as equirectangular projection or adjusted equal-area projection (AEP). By virtue of the correspondence between the points on the surface of the spherical model and the pixel points in the VR video image, the VR image may be accurately "attached" to the surface of the spherical model.

The VR video is played by using the video playback window. The video playback window is similar to a window, and the user watches the VR video through the video playback window, which is similar to the user observing scenery outside the window "through" the window. Specifically, referring to Fig. 2, the extended reality space includes a user (D1 in Fig. 2 represents a position of the user within the extended reality space), a video playback window A1A2A3A4, and a spherical model corresponding to a VR video. In Fig. 2, a circle L1 and a circle L2 are two circles on the spherical model corresponding to the VR video. The user located at the position D1 may watch a VR video image "attached" to the spherical model through the video playback window A1A2A3A4. Moreover, due to the limitation of the video playback window A1A2A3A4, the user may only see an image "attached" to a local area on the surface of the spherical model. Exemplarily, when the user is at the position D1 in Fig. 2, the user may only see an image "attached" to an area B1B2B3B4 on the surface of the spherical model. In other words, when the VR video is played by using the video playback window, the video playback window may only display an image of a specific area of the VR video image.

It should be emphasized that the spherical model is invisible to the user within the extended reality space.

S120: in response to an adjustment operation for the VR video picture, keeping the video playback window fixed in position within the extended reality space, and adjusting the local area of the VR video image displayed in the video playback window, a picture displayed in the video playback window after the adjustment being not exactly the same in content as a picture displayed in the video playback window before the adjustment.

The adjustment operation for the VR video picture may be, for example, an operation indicating that the user desires to change the local area of the VR video image displayed in the video playback window. Changing the local area may mean, for example, that content of a picture of a local area 1 of the VR video image is originally displayed in the video playback window, and after the adjustment, content of a picture of a local area 2 of the VR video image is displayed in the video playback window. The local area 1 and the local area 2 may be completely different, that is, the local area 1 and the local area 2 do not coincide with each other; or the local area 1 and the local area 2 may partially coincide with each other. For example, the local area 1 includes a part or entirety of the local area 2 and some other areas; or the local area 2 may include a part or entirety of the local area 1 and some other areas.

There are multiple implementation methods for this step, which is not limited in the present application. Exemplarily, the implementation method of this step may include: determining target pose information of a spherical model in response to the adjustment operation for the VR video picture, the target pose information of the spherical model including target position information and/or target posture information of the spherical model within the extended reality space; and adjusting a position and/or a pose of the spherical model within the extended reality space based on the target pose information of the spherical model.

The pose information of the spherical model may be, for example, a position and/or a posture of the spherical model within the extended reality space. The target pose information of the spherical model may be, for example, a position and/or a posture to which the spherical model needs to be adjusted, in order to achieve the purpose that "a picture displayed in the video playback window after the adjustment is not exactly the same in content as a picture displayed in the video playback window before the adjustment".

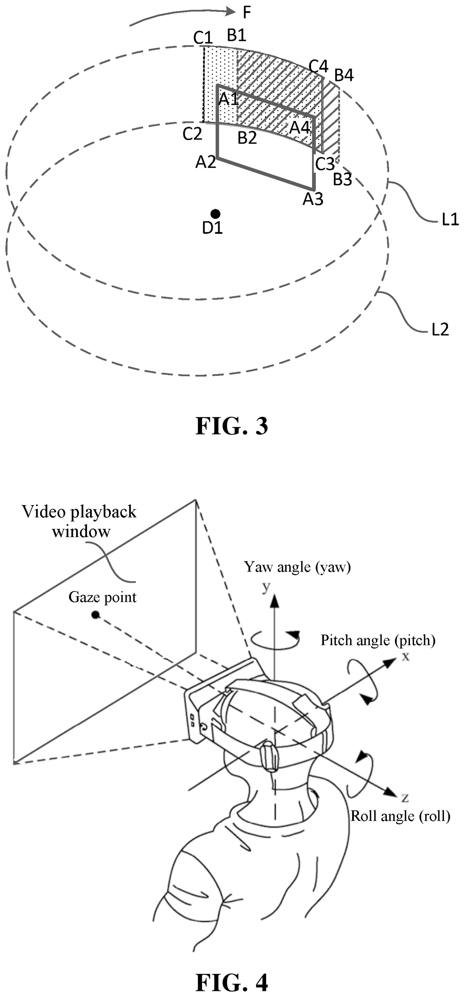

In the technical solution of the present application, the correspondence between the points on the surface of the spherical model and the pixel points in the VR video image is kept unchanged. This results in that when the pose of the spherical model changes, the local area of the VR video image displayed in the video playback window will change. Exemplarily, referring to Fig. 3, at a certain moment, if the user is at the position D1, the user may see, through the video playback window, an image "attached" to the area B1B2B3B4 on the surface of the spherical model. It may be considered that the user may see the image "attached" to the area B1B2B3B4 on the surface of the spherical model, because the image of the area B1B2B3B4 of the spherical model is directly opposite to the video playback window. In a case where the position of the user is kept unchanged, if the spherical model rotates in a direction F in Fig. 2, at another moment, an image "attached" to an area C1C2C3C4 of the spherical model will be "rotated" to a position directly opposite to the video playback window, and thus be seen by the user.

The target pose information of the spherical model is determined in response to the adjustment operation for the VR video picture, which is essentially to adjust the local area of the VR video image displayed in the video playback window by means of adjusting the position and/or the posture of the spherical model.

Further, in some embodiments, the adjustment operation for the VR video picture includes a moving operation for the VR video picture, and "determining the target pose information of the spherical model in response to the adjustment operation for the VR video picture" may include: determining, based on a moving trajectory of the VR video picture, a moving distance of the moving trajectory in a horizontal direction and a moving distance of the moving trajectory in a vertical direction; determining a target yaw angle of the spherical model based on the moving distance of the moving trajectory in the horizontal direction; determining a target pitch angle of the spherical model based on the moving distance of the moving trajectory in the vertical direction; and determining that the target pose information of the spherical model includes the target yaw angle and the target pitch angle of the spherical model.

The moving operation for the VR video picture may be, for example, an operation indicating that the user desires to move the VR video picture upward, downward, leftward, or rightward. Specifically, it may be a sliding operation or a dragging operation of the user on a plane or a curved surface where the video playback window is located, by means of a handle or a gesture.

The moving trajectory of the VR video picture may be, for example, a moving trajectory recorded in a process of the moving operation for the VR video picture.

Determining the target yaw angle of the spherical model based on the moving distance of the moving trajectory in the horizontal direction may include, for example: pre-establishing a conversion relationship between the moving distance of the moving trajectory in the horizontal direction and the yaw angle of the spherical model, and determining the target yaw angle of the spherical model based on the moving distance of the moving trajectory in the horizontal direction and the conversion relationship.

Determining the target pitch angle of the spherical model based on the moving distance of the moving trajectory in the vertical direction may include, for example: pre-establishing a conversion relationship between the moving distance of the moving trajectory in the vertical direction and the pitch angle of the spherical model, and determining the target pitch angle of the spherical model based on the moving distance of the moving trajectory in the vertical direction and the conversion relationship.

Exemplarily, a right-handed Cartesian coordinate system is established with a user's head as the center. The established right-handed Cartesian coordinate system is shown in Fig. 4. It is defined that in the plane where the video playback window is located, in a case where the moving distance in the horizontal direction is equal to the width of the video playback window, the spherical model rotates around the y-axis by $2\pi/3$, that is, $0.66\pi$; and in a case where the moving distance in the vertical direction is equal to the height of the video playback window, the spherical model rotates around the x-axis by $\pi/2$, that is, $0.5\pi$. On this basis, the preset conversion relationship between the moving distance d1 of the moving trajectory in the horizontal direction and the yaw angle yaw of the spherical model may be expressed as formula (1)

$$\text{yaw} = \frac{\text{d}1}{\text{s}1} \cdot 0.66\pi \qquad (1)$$

The conversion relationship between the moving distance d2 of the moving trajectory in the vertical direction and the pitch angle pitch of the spherical model may be expressed as formula (2)

$$\text{pitch} = \frac{\text{d}2}{\text{s}2} \cdot 0.5\pi \qquad (2)$$

where s1 is the width of the video playback window, and s2 is the height of the video playback window.

The target yaw angle and the target pitch angle calculated by formula (1) and formula (2) are in radians, and the target yaw angle and the target pitch angle in radians may be converted into degrees as needed.

It should be emphasized that in the above solution, the roll angle of the spherical model is not considered when determining the target pose information of the spherical model. This is to ensure the visual perception of the VR video image moving horizontally or vertically.

After determining the target yaw angle of the spherical model based on the moving distance of the moving trajectory in the horizontal direction, the method further includes: if the target yaw angle of the spherical model is outside a preset yaw angle range, updating the target yaw angle of the spherical model, the updated target yaw angle of the spherical model being equal to the preset yaw angle; and/or after determining the target pitch angle of the spherical model based on the moving distance of the moving trajectory in the vertical direction, the method further including: if the target pitch angle of the spherical model is outside a preset pitch angle range, updating the target pitch angle of the spherical model, the updated target pitch angle of the spherical model being equal to the preset yaw angle.

The preset yaw angle range is a pre-specified range, which is used to determine whether rotating the spherical model at the target yaw angle will cause excessive movement of the picture displayed in the video playback window, thus making it impossible to watch the VR video normally. For example, for a 180° VR video, the video image is only attached to one side of the hemisphere model, and no image is attached to the other side. If the target yaw angle is too large, resulting in excessive rotation of the spherical model, the VR video picture originally located in the video playback window will be rotated out of the window, and the surface of the spherical model without image attachment will be directly opposite to the video playback window, resulting in no VR video image in the video playback window.

If the target yaw angle of the spherical model is within the preset yaw angle range, it means that rotating the spherical model at the target yaw angle will not cause an undesirable state of excessive movement of the picture displayed in the video playback window. If the target yaw angle of the spherical model is outside the preset yaw angle range, it means that rotating the spherical model at the target yaw angle will cause excessive movement of the picture displayed in the video playback window, and therefore the preset yaw angle is used as the target yaw angle.

In practice, the present application does not limit a specific value of the preset yaw angle. The spherical model is rotated at the preset yaw angle, and the VR video image will not be moved out of the edge of the video playback window, which will not cause excessive movement of the picture displayed in the video playback window.

It is assumed that in a certain scenario, the VR video image is attached to the surface of the spherical model. When a left edge of the VR video is in the same vertical position as a left edge of the video playback window, the yaw angle of the spherical model is the maximum yaw angle (hereinafter referred to as a first angle); and when a right edge of the VR video is in the same vertical position as a right edge of the video playback window, the yaw angle of the spherical model is the minimum yaw angle (hereinafter referred to as a second angle). The preset yaw angle range is a range greater than or equal to the second angle and less than or equal to the first angle. Further, it may be set that if the target yaw angle of the spherical model is within the preset yaw angle range, the target yaw angle of the spherical model is kept unchanged; if the target yaw angle of the spherical model is outside the preset yaw angle range and greater than the first angle, the target yaw angle of the spherical model is updated to be the first angle; and if the target yaw angle of the spherical model is outside the preset yaw angle range and less than the second angle, the target yaw angle of the spherical model is updated to be the second angle.

Similarly, the preset pitch angle range is a pre-specified range, which is used to determine whether rotating the spherical model at the target pitch angle will cause the picture displayed in the video playback window to flip, for example, to be in an upside-down state. If the target pitch angle of the spherical model is within the preset pitch angle range, it means that rotating the spherical model at the target pitch angle will not cause the picture displayed in the video playback window to flip. If the target pitch angle of the spherical model is outside the preset pitch angle range, it means that rotating the spherical model at the target pitch angle will cause the picture displayed in the video playback window to flip.

In practice, the present application does not limit a specific value of the preset pitch angle. The spherical model is rotated at the preset pitch angle, and the picture displayed in the video playback window will not flip.

It is assumed that in a certain scenario, the VR video image is attached to the surface of the spherical model. When an upper edge of the VR video is level with an upper edge of the video playback window, the pitch angle of the spherical model is the maximum pitch angle (hereinafter referred to as a third angle); and when a lower edge of the VR video is level with a lower edge of the video playback window, the pitch angle of the spherical model is the minimum pitch angle (hereinafter referred to as a fourth angle). The preset pitch angle range is a range greater than or equal to the fourth angle and less than or equal to the third angle. Further, it may be set that if the target pitch angle of the spherical model is within the preset pitch angle range, the target pitch angle of the spherical model is kept unchanged; if the target pitch angle of the spherical model is outside the preset pitch angle range and greater than the third angle, the target pitch angle of the spherical model is updated to be the third angle; and if the target pitch angle of the spherical model is outside the preset pitch angle range and less than the fourth angle, the target pitch angle of the spherical model is updated to be the fourth angle.

It should also be noted that in practice, for a 360° VR video, the target yaw angle in the target pose information of the spherical model is not limited to be within the preset yaw angle range, and only the target pitch angle is limited to be within the preset pitch angle range. However, for a 180° VR video, the target yaw angle in the target pose information of the spherical model is limited to be within the preset yaw angle range, and the target pitch angle is limited to be within the preset pitch angle range.

In some other embodiments, optionally, the adjustment operation for the VR video picture includes a scaling operation for the VR video picture, and determining the target pose information of the spherical model in response to the adjustment operation for the VR video picture includes: determining a target scaling ratio of the VR video picture; determining, based on the target scaling ratio of the VR video picture, a target distance from a center of a circle of the spherical model to the video playback window; and determining that the target pose information of the spherical model includes the target distance.

The scaling operation for the VR video picture may indicate, for example, that the user desires to perform an operation of zooming in or out on the VR video picture. It should be noted that in the process of zooming in or out on the VR video picture, the relative positional relationship between the video playback window and the user within the extended reality space is not changed, and the size of the video playback window is not changed.

The target scaling ratio of the VR video picture may be determined based on the scaling operation for the VR video picture. Exemplarily, if multiple options that may be used for scaling the VR video picture are displayed in the extended space, each option corresponds to one scaling ratio of the VR video picture, and different options correspond to different scaling ratios of the VR video picture. A scaling ratio of the VR video picture corresponding to the option selected by the user is used as the target scaling ratio.

In practice, a correspondence between the target scaling ratio of the VR video picture and the distance from the center of the circle of the spherical model to the video playback window may be preestablished, and "determining, based on the target scaling ratio of the VR video picture, the target distance from the center of the circle of the spherical model to the video playback window" may include: determining, based on the target scaling ratio of the VR video picture and the correspondence, the target distance from the center of the circle of the spherical model to the video playback window.

Specifically, when the VR video picture needs to be zoomed in, the distance from the center of the circle of the spherical model to the video playback window is reduced. When the VR video picture needs to be zoomed out, the distance from the center of the circle of the spherical model to the video playback window is increased.

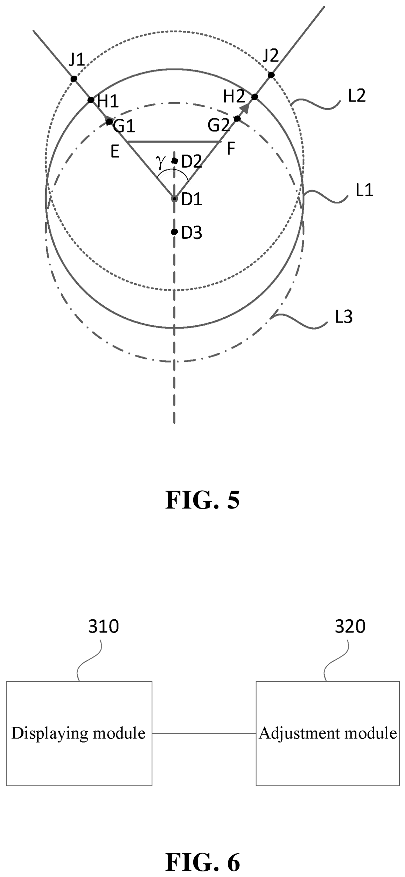

Exemplarily, referring to Fig. 5, EF is the video playback window. In an initial state, the user is located at a point D1, and the user watches a VR video through the video playback window EF. The VR video picture displayed in the video playback window EF is obtained based on the spherical model located at L1. At this time, the point D1 is also the center of the circle of L1. The point D1 is located on a perpendicular bisector of the video playback window EF. An angle $\gamma$ is the maximum horizontal field of view of the user, which is limited by the video playback window. At a certain moment, the user performs a zooming-in operation on the VR video picture, the center of the circle of the spherical model is moved from the point D1 to a point D2, and the distance from the center of the circle of the spherical model to the video playback window is reduced. As the center of the circle of the spherical model is moved from the point D1 to the point D2, the spherical model is moved from L1 to L2. Obviously, in a case where the relative position of the user and the video playback window within the extended reality space is kept unchanged, the maximum horizontal field of view $\gamma$ of the user is kept unchanged due to the limitation of the video playback window. When the spherical model is moved from L1 to L2, the user changes from seeing an image of an area H1H2 to seeing an image of an area J1J2, the picture seen by the user becomes farther, and the content becomes more, thereby achieving the purpose of zooming in on the VR video picture. At another moment, the user performs a zooming-out operation on the VR video picture, the center of the circle of the spherical model is moved from the point D1 to a point D3, and the distance from the center of the circle of the spherical model to the video playback window is increased. As the center of the circle of the spherical model is moved from L1 to L3, the spherical model is moved from L1 to L3. Obviously, in the case where the relative position of the user and the video playback window within the extended reality space is kept unchanged, the maximum horizontal field of view $\gamma$ of the user is kept unchanged due to the limitation of the video playback window. When the spherical model is moved from L1 to L3, the user changes from seeing the image of the area H1H2 to seeing an image of an area G1G2, the picture seen by the user becomes closer, and the content becomes smaller, thereby achieving the purpose of zooming out on the VR video picture.

According to the above technical solution, a video playback window is displayed within an extended reality space, the video playback window being configured to display image content of a local area in a VR video image; and in response to an adjustment operation for a VR video picture, the video playback window is kept fixed in position within the extended reality space, and the local area of the VR video image displayed in the video playback window is adjusted, a picture displayed in the video playback window after the adjustment being not exactly the same in content as a picture displayed in the video playback window before the adjustment. In essence, a method is provided which allows a user to adjust a viewing angle of a VR video according to his/her own needs. Thus, personalized viewing needs of the user may be satisfied.

Based on the preceding technical solution, optionally, in response to a reset operation for the VR video picture, the video playback window is kept fixed in position within the extended reality space, and the local area of the VR video image displayed in the video playback window is reset to a local area displayed in the video playback window at an initial moment, the initial moment being a moment before the adjustment operation for the VR video picture is detected.

The reset operation for the VR video picture may be, for example, an operation expressing that the user desires to restore the picture displayed in the video playback window to an unadjusted state. Specifically, the reset operation may be an operation of clicking a reset option within the extended reality space, performing a preset gesture operation, or the user issuing a voice instruction for resetting the video picture.

In practice, after the user performs a series of adjustments on the VR video picture, the VR video picture may deviate more and more from an optimal viewing position or angle. By keeping the video playback window fixed in position within the extended reality space and resetting the local area of the VR video image displayed in the video playback window to the local area displayed in the video playback window at the initial moment, in response to the reset operation for the VR video picture, the user may re-watch the video from a preset and more reasonable angle, so as to avoid missing important content or affecting viewing experience due to improper operation.

Further, the extended reality space further includes broadcast control options, and the method may further include: the broadcast control options are configured to control a state of a VR video played by the video playback window; and the method further includes: in response to the adjustment operation for the VR video picture, stopping displaying the broadcast control options within the extended reality space.

The broadcast control options may be, for example, functional options displayed within the extended reality space for performing video playback or control. Exemplarily, the broadcast control options may be, for example, at least one of the following: a play/pause control, a volume adjustment control, a fast forward control, a fast backward control, a viewing mode selection control, a stereo effect selection control, a panoramic angle selection control, a subtitle switch control, an audio track selection control, a spatial audio control, a playlist control, a video 2D/3D type selection control, a VR projection format selection control, and a viewing scene selection control.

It is set that in response to the adjustment operation for the VR video picture, displaying the broadcast control options is stopped within the extended reality space, which is favorable for avoiding accidental touching of the broadcast control options in the process of adjusting the VR video picture.

It should be noted that for the sake of simple description, the preceding method embodiments are all expressed as a series of action combinations, but those skilled in the art should know that the present invention is not limited by the described action sequence, because according to the present invention, certain steps may be performed in other order or simultaneously. Secondly, those skilled in the art should also know that the embodiments described in the specification all belong to preferred embodiments, and the involved actions and modules are not necessarily required by the present invention.

Fig. 6 is a schematic structural diagram of an interaction apparatus according to an embodiment of the present disclosure. The interaction apparatus provided by the embodiment of the present disclosure may be configured in an extended reality device. Referring to Fig. 6, the interaction apparatus specifically includes:

a displaying module 310, configured to display a video playback window within an extended reality space, the video playback window being configured to display image content of a local area in a VR video image; and

an adjustment module 320, configured to: in response to an adjustment operation for a VR video picture, keep the video playback window fixed in position within the extended reality space, and adjust the local area of the VR video image displayed in the video playback window, a picture displayed in the video playback window after the adjustment being not exactly the same in content as a picture displayed in the video playback window before the adjustment.

Further, the VR video has a corresponding spherical model, and the adjustment module 320 is configured to:

determine target pose information of the spherical model in response to the adjustment operation for the VR video picture, the target pose information of the spherical model including target position information and/or target posture information of the spherical model within the extended reality space; and

adjust a position and/or a pose of the spherical model within the extended reality space based on the target pose information of the spherical model.

Further, the adjustment operation for the VR video picture includes a moving operation for the VR video picture, and the adjustment module 320 is configured to:

determine, based on a moving trajectory of the VR video picture, a moving distance of the moving trajectory in a horizontal direction and a moving distance of the moving trajectory in a vertical direction;

determine a target yaw angle of the spherical model based on the moving distance of the moving trajectory in the horizontal direction;

determine a target pitch angle of the spherical model based on the moving distance of the moving trajectory in the vertical direction; and

determine that the target pose information of the spherical model includes the target yaw angle and the target pitch angle of the spherical model.

Further, the adjustment module 320 is configured to:

after determining the target yaw angle of the spherical model based on the moving distance of the moving trajectory in the horizontal direction, further include: if the target yaw angle of the spherical model is outside a preset yaw angle range, updating the target yaw angle of the spherical model, the updated target yaw angle of the spherical model being equal to the preset yaw angle; and/or

after determining the target pitch angle of the spherical model based on the moving distance of the moving trajectory in the vertical direction, further include: if the target pitch angle of the spherical model is outside a preset pitch angle range, updating the target pitch angle of the spherical model, the updated target pitch angle of the spherical model being equal to the preset yaw angle.

Further, the adjustment module 320 is configured to:

determine a target scaling ratio of the VR video picture;
determine, based on the target scaling ratio of the VR video picture, a target distance from a center of a circle of the spherical model to the video playback window; and
determine that the target pose information of the spherical model includes the target distance.

Further, the apparatus further includes a resetting module, configured to:
in response to a reset operation for the VR video picture, keep the video playback window fixed in position within the extended reality space, and reset the local area of the VR video image displayed in the video playback window to a local area displayed in the video playback window at an initial moment, the initial moment being a moment before the adjustment operation for the VR video picture is detected.

Further, the extended reality space further includes broadcast control options, and the broadcast control options are configured to control a state of a VR video played by the video playback window; and the apparatus further includes an option display state adjustment module, configured to:
in response to the adjustment operation for the VR video picture, stop displaying the broadcast control options within the extended reality space.

The interaction apparatus provided by the embodiment of the present disclosure may execute the steps included in the interaction method provided by the method embodiment of the present disclosure, and has the steps and beneficial effects for execution, which will not be repeated here.

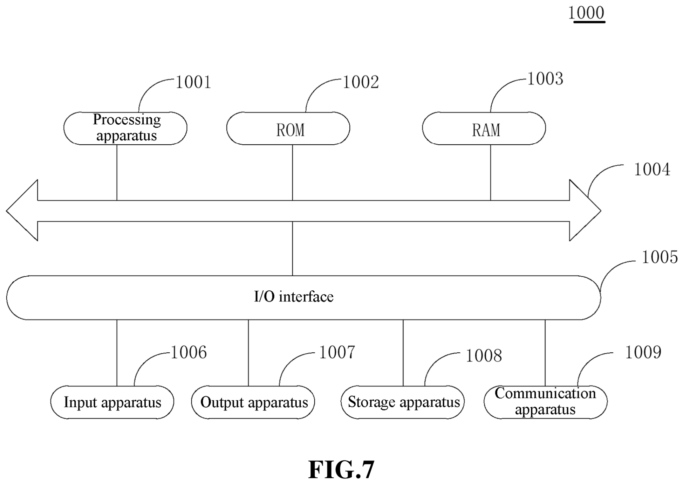

Fig. 7 is a schematic structural diagram of an electronic device according to an embodiment of the present disclosure. The following specifically refers to Fig. 7, which illustrates a schematic structural diagram of an electronic device 1000 suitable for implementing the embodiments of the present disclosure. The electronic device 1000 in the embodiment of the present disclosure may include, but is not limited to, mobile terminals such as a mobile phone, a notebook computer, a digital broadcast receiver, a personal digital assistant (PDA), a tablet computer, a portable media player (PMP), a vehicle-mounted terminal (such as a vehicle navigation terminal), a wearable electronic device, etc., and fixed terminals such as a digital TV, a desktop computer, a smart home device, etc. The electronic device shown in Fig. 7 is only an example, and should not impose any limitation on the function and scope of use of the embodiments of the present disclosure.

As shown in Fig. 7, the electronic device 1000 may include a processing apparatus (such as a central processing unit, a graphics processor, etc.) 1001, which may perform various appropriate actions and processes according to a program stored in a read-only memory (ROM) 1002 or a program loaded from a storage apparatus 1008 into a random access memory (RAM) 1003 to implement the interaction method of the embodiment according to the present disclosure. The RAM 1003 further stores various programs and information required for operations of the electronic device 1000. The processing apparatus 1001, the ROM 1002, and the RAM 1003 are connected to each other through a bus 1004. An input/output (I/O) interface 1005 is also connected to the bus 1004.

Generally, the following apparatuses may be connected to the I/O interface 1005: an input apparatus 1006 including, for example, a touch screen, a touchpad, a keyboard, a mouse, a camera, a microphone, an accelerometer, a gyroscope, etc.; an output apparatus 1007 including, for example, a liquid crystal display (LCD), a speaker, a vibrator, etc.; a storage apparatus 1008 including, for example, a magnetic tape, a hard disk, etc.; and a communication apparatus 1009. The communication apparatus 1009 may allow the electronic device 1000 to perform wireless or wired communication with other devices to exchange information. Although Fig. 7 shows the electronic device 1000 having various apparatuses, it should be understood that it is not required to implement or have all the apparatuses shown. More or fewer apparatuses may be implemented or provided alternatively.

In particular, according to the embodiments of the present disclosure, the process described above with reference to the flowchart may be implemented as a computer software program. For example, the embodiments of the present disclosure include a computer program product, which includes a computer program carried on a non-transitory computer-readable medium, the computer program including program codes for performing the method shown in the flowchart, thereby implementing the interaction method as described above. In such an embodiment, the computer program may be downloaded and installed from a network through the communication apparatus 1009, or installed from the storage apparatus 1008, or installed from the ROM 1002. When the computer program is executed by the processing apparatus 1001, the preceding functions defined in the method of the embodiment of the present disclosure are executed.

It should be noted that the above computer-readable medium in the present disclosure may be a computer-readable signal medium, a computer-readable storage medium, or any combination thereof. The computer-readable storage medium may be, for example, but is not limited to, an electronic, magnetic, optical, electromagnetic, infrared, or semi-conductive system, apparatus or device, or any combination thereof. More specific examples of the computer-readable storage medium may include, but are not limited to: an electrically connected portable computer magnetic disk with one or more wires, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the preceding. In the present disclosure, the computer-readable storage medium may be any tangible medium including or storing a program, and the program may be used by or used in conjunction with an instruction execution system, apparatus or device. In the present disclosure, the computer-readable signal medium may include an information signal propagated on a baseband or as a part of a carrier, and computer-readable program codes are carried in the information signal. The propagated information signal may be in multiple forms, including but not limited to, an electromagnetic signal, an optical signal, or any suitable combination thereof. The computer-readable signal medium may also be any computer-readable medium other than the computer-readable storage medium, and the computer-readable signal medium may send, propagate or transmit the program used by or in conjunction with the instruction execution system, apparatus or device. The program codes contained on the computer-readable medium may be transmitted in any suitable medium, including but not limited to: a wire, an optical cable, a radio frequency (RF), etc., or any suitable combination of the preceding.

In some implementations, the client and the server may communicate using any known or future developed network protocol, such as the hypertext transfer protocol (HTTP), and may be interconnected with any form or medium of digital information communication (for example, a communication network). Examples of the communication network include a local area network ("LAN"), a wide area network ("WAN"), an internet (for example, the Internet), a peer-to-peer network (for example, an Ad-Hoc network), and any network known or to be developed in the future.

The computer-readable medium may be contained in the electronic device or may exist alone without being assembled into the electronic device.

The computer-readable medium carries one or more programs, and the one or more programs, when executed by the electronic device, cause the electronic device to:

display a video playback window within an extended reality space, the video playback window being configured to display image content of a local area in a VR video image; and

in response to an adjustment operation for a VR video picture, keep the video playback window fixed in position within the extended reality space, and adjust the local area of the VR video image displayed in the video playback window, a picture displayed in the video playback window after the adjustment being not exactly the same in content as a picture displayed in the video playback window before the adjustment.

Optionally, the one or more programs, when executed by the electronic device, may cause the electronic device to perform other steps described in the preceding embodiments.

The computer program codes for performing the operations of the present disclosure may be written in one or more programming languages or a combination thereof, wherein the programming languages include, but are not limited to, object-oriented programming languages such as Java, Smalltalk, C++, and include conventional procedural programming languages such as "C" language or similar programming languages. The program codes may be executed entirely on a user computer, partly on the user computer, as a stand-alone software package, partly on the user computer and partly on a remote computer, or entirely on the remote computer or server. In the case of involving the remote computer, the remote computer may be connected to the user computer through any kind of network, including a local area network (LAN) or a wide area network (WAN), or may be connected to an external computer (for example, connected via the Internet using an Internet service provider).

The flowcharts and block diagrams in the drawings illustrate the possibly implemented architectures, functions and operations of the system, method and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the drawings. For example, two blocks shown in succession may actually be executed substantially in parallel, or they may sometimes be executed in the reverse order, depending on the functions involved. It should also be noted that each block in the block diagram and/or the flowchart, and the combination of the blocks in the block diagram and/or the flowchart may be implemented by a dedicated hardware-based system that executes specified functions or operations, or may be implemented by a combination of dedicated hardware and computer instructions.

The involved units described in the embodiments of the present disclosure may be implemented by software or hardware. Among them, the name of a unit does not constitute a limitation on the unit itself under certain circumstances.

The functions described above may be performed at least partially by one or more hardware logic components. For example, without limitation, exemplary types of hardware logic components that may be used include: a field programmable gate array (FPGA), an application specific integrated circuit (ASIC), an application specific standard product (ASSP), a system on chip (SOC), a complex programmable logic device (CPLD), etc.

In the context of the present disclosure, a machine-readable medium may be a tangible medium that may include or store a program for use by or in combination with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semi-conductive system, apparatus or device, or any suitable combination of the preceding. More specific examples of the machine-readable storage medium may include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the preceding.

According to one or more embodiments of the present disclosure, the present disclosure provides an electronic device, including:

> one or more processors;
> a memory, configured to store one or more programs,
> where the one or more programs, when executed by the one or more processors, cause the one or more processors to implement the interaction method according to any one provided by the present disclosure.

According to one or more embodiments of the present disclosure, the present disclosure provides a computer-readable storage medium, on which a computer program is stored, the computer program, when executed by a processor, implementing the interaction method according to any one provided by the present disclosure.

An embodiment of the present disclosure further provides a computer program product, which includes a computer program or instructions, the computer program or instructions, when executed by a processor, implementing the interaction method as described above.

It should be noted that in this article, relational terms such as "first" and "second" are only used to distinguish one entity or operation from another entity or operation, and do not necessarily require or imply any actual relationship or order between these entities or operations. Moreover, terms "include", "include" or any other variation thereof are intended to cover non-exclusive inclusion, such that a process, method, object or device including a series of elements includes not only those elements, but also other elements not explicitly listed or elements inherent to such process, method, object or device. Without further restrictions, an element defined by the phrase "including a" does not exclude the existence of other identical elements in the process, method, object or device including the element.

The preceding descriptions are only specific implementations of the present disclosure, so that those skilled in the art may understand or implement the present disclosure. Various modifications to these embodiments will be obvious to those skilled in the art, and the general principles defined herein may be implemented in other embodiments without departing from the spirit or scope of the present disclosure. Therefore, the present disclosure will not be limited to the embodiments described herein, but rather to the widest scope consistent with the principles and novel features disclosed herein.

**Claims**

1.  An interaction method, comprising:

    > displaying (S110) a video playback window within an extended reality space, the video playback window being configured to display image content of a local area in a VR video image; and
    > in response to an adjustment operation for a VR video picture, keeping (S120) the video playback window fixed in position within the extended reality space, and adjusting the local area of the VR video image displayed in the video playback window, a picture displayed in the video playback window after the adjustment being not exactly the same in content as a picture displayed in the video playback window before the adjustment.

2.  The method of claim 1, wherein the VR video has a corresponding spherical model, and in response to the adjustment operation for the VR video picture, adjusting the local area of the VR video image displayed in the video playback window comprises:

    > determining target pose information of the spherical model in response to the adjustment operation for the VR video picture, the target pose information of the spherical model comprising target position information and/or target posture information of the spherical model within the extended reality space; and
    > adjusting a position and/or a pose of the spherical model within the extended reality space based on the target pose information of the spherical model.

3. The method of claim 2, wherein the adjustment operation for the VR video picture comprises a moving operation for the VR video picture, and determining the target pose information of the spherical model in response to the adjustment operation for the VR video picture comprises:

determining, based on a moving trajectory of the VR video picture, a moving distance of the moving trajectory in a horizontal direction and a moving distance of the moving trajectory in a vertical direction;
determining a target yaw angle of the spherical model based on the moving distance of the moving trajectory in the horizontal direction;
determining a target pitch angle of the spherical model based on the moving distance of the moving trajectory in the vertical direction; and
determining that the target pose information of the spherical model comprises the target yaw angle and the target pitch angle of the spherical model.

4. The method of claim 3, wherein,

after determining the target yaw angle of the spherical model based on the moving distance of the moving trajectory in the horizontal direction, the method further comprises: in response to the target yaw angle of the spherical model being outside a preset yaw angle range, updating the target yaw angle of the spherical model, the updated target yaw angle of the spherical model being equal to a preset yaw angle; and/or
after determining the target pitch angle of the spherical model based on the moving distance of the moving trajectory in the vertical direction, the method further comprises: in response to the target pitch angle of the spherical model being outside a preset pitch angle range, updating the target pitch angle of the spherical model, the updated target pitch angle of the spherical model being equal to the preset yaw angle.

5. The method of claim 2, wherein the adjustment operation for the VR video picture comprises a scaling operation for the VR video picture, and determining the target pose information of the spherical model in response to the adjustment operation for the VR video picture comprises:

determining a target scaling ratio of the VR video picture;
determining, based on the target scaling ratio of the VR video picture, a target distance from a center of a circle of the spherical model to the video playback window; and
determining that the target pose information of the spherical model comprises the target distance.

6. The method of claim 2, further comprising:
in response to a reset operation for the VR video picture, keeping the video playback window fixed in position within the extended reality space, and resetting the local area of the VR video image displayed in the video playback window to a local area displayed in the video playback window at an initial moment, the initial moment being a moment before the adjustment operation for the VR video picture is detected.

7. The method of claim 1, wherein the extended reality space further comprises broadcast control options, and the broadcast control options are configured to control a state of a VR video played by the video playback window, and the method further comprises:
in response to the adjustment operation for the VR video picture, stopping displaying the broadcast control options within the extended reality space.

8. An interaction apparatus, comprising:

a displaying module (310), configured to display a video playback window within an extended reality space, wherein the video playback window is configured to display image content of a local area in a VR video image; and
an adjustment module (320), configured to: in response to an adjustment operation for a VR video picture, keep the video playback window fixed in position within the extended reality space, and adjust the local area of the VR video image displayed in the video playback window, a picture displayed in the video playback window after the adjustment being not exactly the same in content as a picture displayed in the video playback window before the adjustment.

9. An electronic device, comprising:

one or more processors; and
a storage apparatus, configured to store one or more programs,
the one or more programs, when executed by the one or more processors, causing the one or more processors to implement the method of any of claims 1 to 7.

10. A computer-readable storage medium having a computer program stored thereon, the computer program, when executed by a processor, implementing the method of any of claims 1 to 7.

Displaying a video playback window within an extended reality space, the video playback window being configured to display image content of a local area in a VR video image ⟋S110

In response to an adjustment operation for a VR video picture, keeping the video playback window fixed in position within the extended reality space, and adjusting the local area of the VR video image displayed in the video playback window, a picture displayed in the video playback window after the adjustment being not exactly the same in content as a picture displayed in the video playback window before the adjustment ⟋S120

**FIG. 1**

**FIG. 2**

**FIG. 3**

**FIG. 4**

**FIG. 5**

**FIG. 6**

Displaying module — Adjustment module

310   320

**FIG.7**

**EUROPEAN SEARCH REPORT**

Application Number

EP 26 15 2287

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/060959 A1 (BEIJING ZITIAO NETWORK TECHNOLOGY CO LTD [CN]) 28 March 2024 (2024-03-28) * paragraphs [0069], [0086], [0091], [0093], [0094], [0106], [0113], [0119], [0125], [0128]; figures 2-9, 15,16 * * paragraphs [0131], [0134] - [0135], [0157] * ----- | 1-10 | INV. G06F3/01 G06F3/04815 |

**TECHNICAL FIELDS SEARCHED (IPC)**

G06F
G06T

The present search report has been drawn up for all claims

| Place of search | Date of completion of the search | Examiner |
|---|---|---|
| Munich | 27 May 2026 | Heselius, Per |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...........................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 26 15 2287

This annex lists the patent family members relating to the patent documents cited in the above-mentioned European search report.
The members are as contained in the European Patent Office EDP file on
The European Patent Office is in no way liable for these particulars which are merely given for the purpose of information.

27-05-2026

| Patent document cited in search report | Publication date | Patent family member(s) | Publication date |
|---|---|---|---|
| WO 2024060959 A1 | 28-03-2024 | CN 117784915 A<br>WO 2024060959 A1 | 29-03-2024<br>28-03-2024 |

EPO FORM P0459

For more details about this annex : see Official Journal of the European Patent Office, No. 12/82